# EUROPÄISCHE PATENTANMELDUNG

(11) **EP 1 244 000 A2**
(43) Veröffentlichungstag der Anmeldung: **25.09.2002**
(21) Anmeldenummer: 02005104.1
(22) Anmeldetag: 07.03.2002
(51) Int. Cl.: G06F 1/16

(54) **Halterung für einen Flachbildschirm mit Schubladenfach**

(30) Priorität: 21.03.2001 DE 10113870
(71) Anmelder: ACME Portable Machines GmbH, 52074 Aachen (DE)
(72) Erfinder: Schmidt, Robert, 52074 Aachen (DE)
(74) Vertreter: Castell, Klaus, Dr.-Ing.

(57) **Zusammenfassung**

Eine Halterung wird für einen Flachbildschirm so ausgebildet, dass sie kastenförmig ist und ein Fach mit mindestens einer Computeranschlussstelle aufweist.

Dies ermöglicht es, in unmittelbarer Nähe des Bildschirms einen Computer anzuordnen. Dieses Fach ist vorzugsweise nach Art eines Schubfaches so ausgebildet, dass der Computer auf einfache Art und Weise in das Fach einschiebbar ist.

## Beschreibung

Die Erfindung betrifft eine Halterung für einen Bildschirm, Flachbildschirm mit einer derartigen Halterung und Anordnung aus Flachbildschirm, Schubladenfach und Computer.

Flachbildschirme werden heutzutage in unterschiedlichen Größen wie beispielsweise mit einer Bildschirmdiagonale von 42 Zoll hergestellt. Diese Bildschirme müssen sicher an einer Wand, der Decke oder auch einem Tisch montiert werden. Da ein Herunterfallen dieser Bildschirme zu einer Zerstörung des Gerätes führt, werden verschiedenartigste Halterungen an der Rückseite des Bildschirmes vorgesehen.

Der Erfindung liegt die Aufgabe zugrunde, derartige Bildschirme weiter zu verbessern. Diese Aufgabe wird dadurch gelöst, dass eine Halterung für einen Bildschirm kastenförmig ausgebildet ist und ein Fach mit mindestens einer Computeranschlussstelle aufweist.

Die Aufgabe wird dadurch gelöst, dass eine Halterung für einen Bildschirm kastenförmig ausgebildet ist, ein Fach mit mindestens einer Computeranschlussstelle aufweist und die Halterung lösbar mit der Rückseite des Bildschirms verbindbar ist. Der Erfindung liegt die Erkenntnis zugrund, dass Wandbildschirme für ihren Betrieb regelmäßig einen Computer benötigen und dieser Computer meist in der Nähe des Wandbildschirms aufgestellt wird. Dies führt dazu, dass auch bei einer guten Halterung des Bildschirms an der Wand für den Computer eine Stelle gefunden werden' muß, an der er sicher steht und wenig stört. Die kastenförmige Ausbildung der Halterung ermöglicht es, in der Halterung ein Fach mit mindestens einer Computeranschlussstelle vorzusehen. In dieses Fach kann der Computer wie in eine Schublade eingesteckt werden, so dass der Computer in unmittelbarer Nähe des Bildschirms sicher angeordnet ist.

Im Rahmen der Beschreibung der Erfindung wird unter Computer eine Vorrichtung verstanden, die die Aufgaben eines Computers übernehmen kann. Dies ist in einem einfachen Ausführungsbeispiel eine Platine, die in das Fach einsteckbar ist. Der einsteckbare Computer kann jedoch beispielsweise auch schachtelförmig sein und weitere funktionelle Einheiten, wie Schalter, Signallampen, Steckplätze etc. aufweisen.

Die Halterung ermöglicht somit einen kompakten Aufbau aus Computer und Bildschirm, der an einer Wand, einer Decke oder auf einem Tisch befestigbar ist.

Vorteilhaft ist es, wenn die Halterung außerhalb des Faches eine Stromanschlussstelle aufweist. Dies ermöglicht es, die für den Computer benötigte Stromversorgung und vorzugsweise auch den für den Flachbildschirm benötigten Strom über diese Anschlussstelle der Halterung zuzuführen. Der elektrische Strom kann innerhalb der Halterung dann beispielsweise über Kabel weiter verteilt werden.

Eine praktische einfache Ausführungsform sieht vor, dass die Halterung ein Kabel zum Verbinden der Computeranschlussstelle mit dem Bildschirm aufweist. Dies ermöglicht es, auf einfache Art und Weise den Bildschirm lösbar mit der Halterung zu verbinden.

Vorteilhaft ist es, wenn die Halterung eine Kontaktstelle zum Verbinden der Computeranschlussstelle mit dem Bildschirm aufweist. Diese Kontaktstelle kann beispielsweise als Stecker-Buchse-Anordnung oder als federnde Kontaktflächen ausgebildet sein, die es ermöglichen, direkt bei der Verbindung des Bildschirms mit der Halterung die entsprechende Anbindung des Bildschirms an die Computeranschlussstelle zu bewirken.

Eine praktische Ausführungsform sieht vor, dass die Halterung ein Netzgerät aufweist. Dieses Netzgerät kann gleichermaßen für die Stromversorgung des Computer als auch für die Stromversorgung des Bildschirms Verwendung finden.

Die Halterungen können ohne Computer hergestellt und vertrieben werden. Vorteilhaft ist es, wenn die Halterung einen in das Fach einschiebbaren Computer aufweist. Dieser Computer kann dann an die Abmessungen des Faches angepasst werden oder das Fach kann an die Abmessungen eines derartigen Computers angeglichen sein.

Ein einfaches Hineinschieben und Herausnehmen des Computers wird dadurch erreicht, dass der einschiebbare Computer einen Griff aufweist.

Die der Erfindung zugrundeliegende Aufgabe wird auch mit einem Flachbildschirm mit einer derartigen Halterung gelöst.

Bei einem derartigen Flachbildschirm ist es vorteilhaft, wenn die Umfangslinie der Rückseite des Flachbildschirms etwa einer Umfangslinie der Halterung entspricht. Dies führt dazu, dass die Halterung im Bereich der Anlagefläche am Bildschirm in ihren Abmessungen zum Bildschirm passt. Hierdurch wird ein kompakter, ästhetisch ansprechender Aufbau des Flachbildschirmes erreicht.

Vorteilhaft ist es, wenn die Halterung etwa die Tiefe des Flachbildschirms aufweist. Erfreulicherweise hat sich herausgestellt, dass eine derartige Halterung so hergestellt werden kann, dass sie nur unwesentlich dicker als der Bildschirm ist und sogar in geringerer Dicke als ein Flachbildschirm herstellbar ist.

Ein besonders günstiger Aufbau von Flachbildschirm und Halterung wird dadurch erzielt, dass mindestens eine Seitenfläche des Flachbildschirms mit einer Seitenfläche der Halterung fluchtet. Vorzugsweise fluchten die gesamten vier Randflächen der Halterung mit den vier Randflächen des Flachbildschirms, so dass die Halterung mit dem Flachbildschirm eine zusammenpassende Einheit bildet.

Eine sichere Anordnung des Computers in der Halterung wird dadurch erzielt, dass das Fach in der Nähe der Oberseite des Flachbildschirms angeordnet ist. Dies ermöglicht es, den Computer entsprechend der Richtung der Schwerkraft in die Halterung hinein rutschen zu lassen. Ein derartig angeordneter Computer muss nicht oder weniger als bei anderen Anordnungsvarianten gegen Herausrutschen aus der Halterung gesichert werden.

Die Aufgabe wird auch von einer Anordnung aus Flachbildschirm, Schubladenfach und Computer gelöst, bei der der Flachbildschirm am Schubladenfach lösbar befestigt ist, der Computer in das Schubladenfach einschiebbar und der Computer mit dem Schubladenfach über eine steckbare Datenverbindung verbunden ist.

Dies ermöglicht es, unterschiedliche Arten bekannter Flachbildschirme über ein Schubladenfach mit einem Computer zu verbinden. Die Ausführung des Schubladenfaches kann individuell auf einen speziellen Flachbildschirm abgestellt sein oder es kann zwischen dem Schubladenfach und dem Flachbildschirm ein Adapter vorgesehen werden, der es ermöglicht, das Schubladenfach lösbar am Flachbildschirm zu befestigen.

Da der Computer beim Einschieben in das Schubladenfach definiert geführt wird, ist es möglich, dass die Verbindung durch das Einschieben des Computers in das Schubladenfach herstellbar ist. Die Schublade ermöglicht es dabei, den Computer so genau zu führen, dass ein am Computer befestigter Stecker mit einer am Schubladenfach befestigten Buchse zusammenwirkt oder eine am Computer befestigte Buchse während des Einschiebens des Computers über einen am Schubladenfach befestigten Stecker geschoben wird.

Vorteilhaft ist es, wenn das Schubladenfach an der Rückseite des Flachbildschirms angeordnet ist. Dadurch wird der Flachbildschirm geringfügig dicker. Das Schubladenfach kann jedoch dazu verwendet werden, den Flachbildschirm an einer Wand oder Decke zu befestigen, indem Haltebügel am Schubladenfach angeordnet werden.

Die erfindungsgemäße Anordnung eignet sich besonders für große Flachbildschirme. Insbesondere in diesem Fall ist das Schubladenfach kleiner als der Flachbildschirm.

Wenn das Schubladenfach an der Rückseite des Flachbildschirms angeordnet ist und kleiner als der Flachbildschirm ist, hat dies den Vorteil, das bei einer Sicht auf die Bildfläche des Flachbildschirms das Schubladenfach nicht wahrnehmbar ist.

Es wurden verschiedene Vorrichtungen entwickelt, um Bildschirme an einer Decke, an einer Wand oder einem Ständer zu befestigen. Diese Vorrichtungen müssen individuell auf verschiedene Arten von Flachbildschirmen angepasst werden und sind teuer in der Herstellung. Daher wird vorgeschlagen, dass das Schubladenfach eine Einrichtung zur Befestigung der Anordnung an einer Decke, einer Wand oder einem Ständer aufweist.

Das Schubladenfach ist vorzugsweise so ausgebildet, dass es mit verschiedenen Bildschirmen entweder direkt oder über einen Adapter lösbar verbunden werden kann. Eine am Schubladenfach angeordnete Einrichtung zur Befestigung der Anordnung an einer Decke, einer Wand oder einem Ständer hat somit den Vorteil, dass das Schubladenfach auch an der Decke, der Wand oder dem Ständer fixiert bleiben kann, während entweder der Bildschirm vom Schubladenfach entfernt wird oder der Computer aus dem Schubladenfach herausgezogen wird. Gerade die reparaturanfälligen Teile wie Bildschirm und Computer können somit auf einfache Art und Weise aus dem Schubladenfach herausgezogen werden oder vom Schubladenfach abgehängt werden und durch ein Austauschteil ersetzt werden.

Ein Ausführungsbeispiel der Erfindung ist in der Zeichnung dargestellt und wird im folgenden näher erläutert. Es zeigt
- Figur 1: schematisch eine perspektivische Sicht auf die Unterseite eines Plasmabildschirmes mit Halterung
- Figur 2: einen vergrößerten Ausschnitt einer perspektivischen Sicht auf den Bereich des Faches an der Oberseite der Halterungund
- Figur 3: eine perspektivische Ansicht von Flachbildschirm, Schubladenfach und Computer.

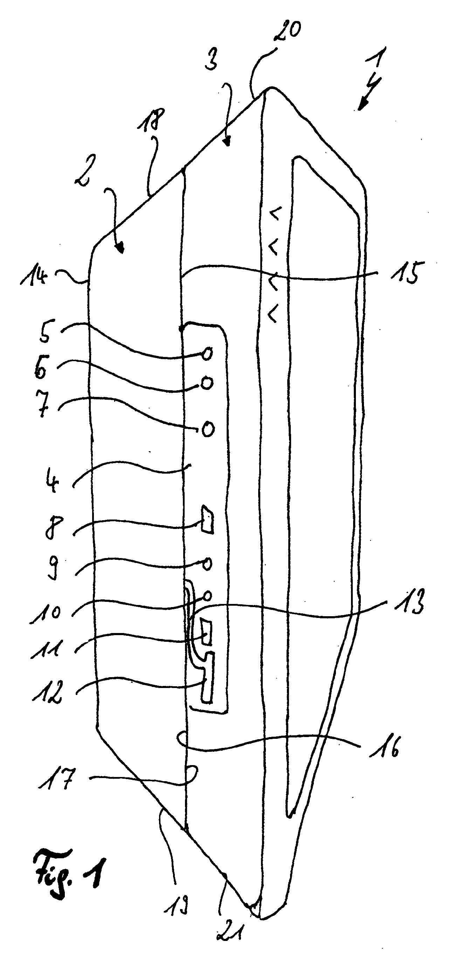

Die in Figur 1 gezeigte Anordnung besteht im wesentlichen aus der Halterung 2 und dem Flachbildschirm 3. Der Flachbildschirm ist ein handelsüblicher Plasmabildschirm mit einer 42 Zoll Bildschirmfläche. Dieser Bildschirm hat an seiner Unterseite ein Fach 4, in dem die Anschlüsse und Einstelleinrichtungen 5 bis 12 angeordnet sind. Die Anschlussstelle 12 ist mit einem Kabel 13 versehen, das den Bildschirm 3 mit einem in der Halterung 2 angeordneten Computer (nicht gezeigt) verbindet.

Die Halterung 2 hat eine Seite 14, die bei einer Wandmontage des Bildschirms an der Wand anliegt und eine Seite 15, die die Anlagefläche am Bildschirm 3 bildet. Die Umfangslinie 16 der Rückseite des Flachbildschirms 3 entspricht in ihrer Form und Lage der Umfangslinie 17 der am Bildschirm 3 anliegenden Seite 15 der Halterung 2. Die Tiefe der Halterung zwischen der an der Wand anliegenden Seite 14 und der am Bildschirm 3 anliegenden Seite 15 entspricht etwa der Tiefe des Flachbildschirms zwischen seiner an der Halterung anliegenden Seite und der Bildschirmoberfläche.

Die Form des Bildschirms 3 ist kegelstumpfartig und die Form der Halterung 2 ist ebenfalls kegelstumpfartig ausgebildet, wobei die Seitenflächen 18, 19 der Halterung mit den Seitenflächen 20, 21 des Flachbildschirms 3 fluchten.

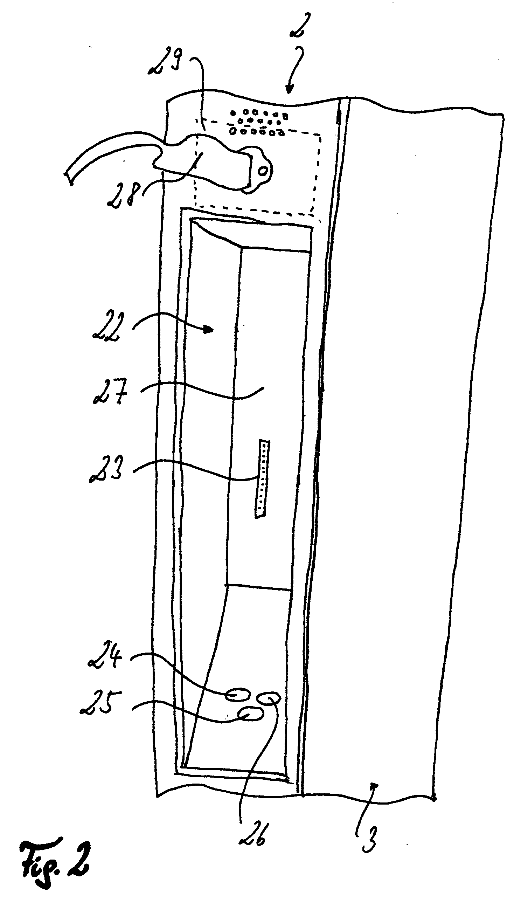

Die in Figur 2 gezeigte gegenüberliegende Seite der Halterung 2 zeigt das Fach 22 mit der Computeranschlussstelle 23. Darüber hinaus sind im Fach 22 Kabeldurchlässe 24, 25 und 26 angeordnet.

Das Fach 22 ist so ausgebildet, dass ein Computer in dieses Fach einschiebbar ist. Der Computer koppelt dann an der Grundfläche 27 des Faches 22 mit der Anschlussstelle 23. Die Anschlussstelle 23 steht auf der dem Fach 22 gegenüber liegenden Seite der Grundfläche 27 des Faches 22 mit einem Kabel 13 in Verbindung, das den Computer (nicht gezeigt) mit dem Flachbildschirm 3 verbindet. Ein Stecker 28 dient als Stromzuleitung in die kastenförmige Halterung 2, in der strichpunktiert angedeutet ein Netzgerät 29 vorgesehen ist.

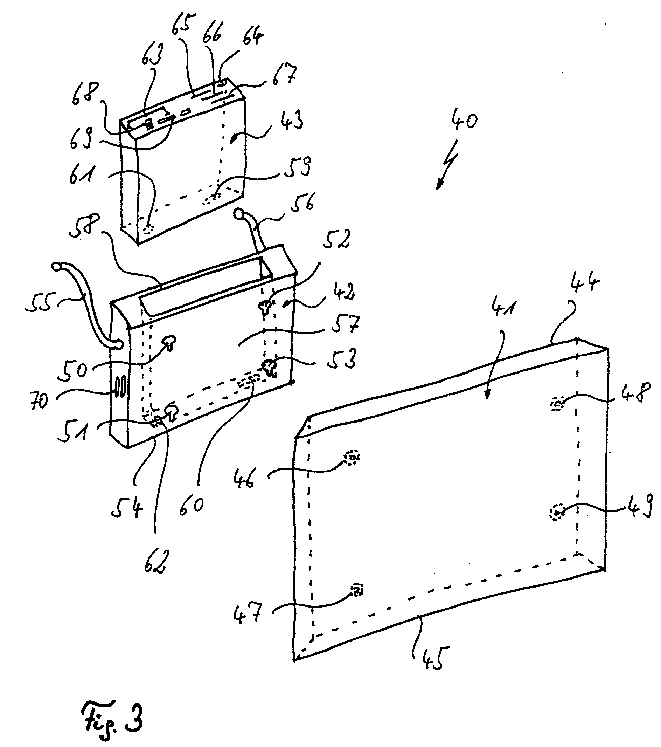

Die in Figur 3 gezeigte Anordnung 40 besteht aus dem Flachbildschirm 41, dem Schubladenfach 42 und dem Computer 43. Der Flachbildschirm 41 ist ein handelsüblicher LCD-Bildschirm mit einer besonders großen Bildfläche und einem von der Bildfläche weg konisch zusammenlaufenden Gehäuse. Die Rückseite 44 des Bildschirms 41 hat somit eine kleinere Fläche als die Vorderseite 45 des Bildschirms.

An der Rückseite 44 des Bildschirms 41 sind vier nagelkopfförmige Befestigungselemente 46, 47, 48 und 49 vorgesehen. Diese Befestigungselemente 46 bis 49 erlauben es, den Bildschirm 41 an birnenförmigen Ausnehmungen 50, 51, 52 und 53 an der Vorderseite 54 des Schubladenfaches 42 zu befestigen. Die nagelkopfartigen Befestigungselemente 46 bis 49 können hierbei am breiteren Ende der birnenförmigen Ausnehmungen 50 bis 53 aufgesteckt werden. Der Bildschirm 41 rutscht dann soweit nach unten, bis die nagelkopfartigen Halteelemente in dem verengten Bereich der birnenförmigen Ausnehmungen 50 bis 53 anliegt.

Das Schubladenfach 42 hat zwei Bügel 55 und 56 mit denen es an einer Wand, einer Decke oder einem Ständer (nicht gezeigt) befestigbar ist. Außerdem hat das Schubladenfach 42 eine kastenförmige Ausnehmung 57 (gestrichelt gezeichnet) mit einer Öffnung 58, die es erlaubt, den Computer 43 wie eine Schublade in das Schubladenfach 42 einzuschieben.

Beim Einschieben des Computers 43 in das Schubladenfach 42 wirkt die Buchse 59 (gestrichelt gezeichnet) mit dem Stecker 60 (gestrichelt gezeichnet) derart zusammen, dass bei ordnungsgemäß eingeschobenem Computer 43 ein elektrischer Kontakt zwischen dem Stecker 60 und der Buchse 59 geschlossen ist. Selbstverständlich kann auch am Schubladenfach 42 eine Buchse und am Computer 43 ein Stecker vorgesehen werden. Das gleiche trifft für die ebenfalls gestrichelt eingezeichnete Buchse 61 zu, die mit dem Stecker 62 zusammenwirkt. Ein Griff 63 erleichtert es, den Computer 43 in das Schubladenfach 42 ordnungsgemäß einzustecken.

In dem in Figur 3 gezeigten Ausführungsbeispiel dient der Stecker 62 der Stromversorgung und der Stecker 60 dem Dateninput. Auf der Oberseite des Computers 43 ist ein Ein/Ausschalter 64 vorgesehen. Daneben sind zwei PCI-Steckplätze 65, 66 und ein Steckplatz für ein CD/DVD-Laufwerk 67 vorgesehen. Weiterhin sind an dieser Oberseite des Computers 43 Netzwerkschnittstellen 68 und Schnittstellen für Peripheriegeräte wie beispielsweise eine Computermaus oder einen Drucker vorgesehen.

Um eine Überhitzung des Computers 43 zu vermeiden, sind im Schubladenfach 42 Lüftungsschlitze 70 vorgesehen, die eine Luftströmung zum im Computer eingebauten Lüfter ermöglichen.

## Patentansprüche

1. Halterung (2) für einen Bildschirm (3), die kastenförmig ausgebildet ist und ein Fach (22) mit mindestens einer Computeranschlussstelle (23) aufweist, ***dadurch gekennzeichnet, dass*** die Halterung (2) lösbar mit der Rückseite des Bildschirms (3) verbindbar ist.

2. Halterung nach Anspruch 1, ***dadurch gekennzeichnet, dass*** sie außerhalb des Faches (22) eine Stromanschlussstelle (28) aufweist.

3. Halterung nach Anspruch 1 oder 2, ***dadurch gekennzeichnet, dass*** sie ein Kabel (13) zum Verbinden der Computeranschlussstelle (23) mit dem Bildschirm (3) aufweist.

4. Halterung nach einem der vorhergehenden Ansprüche, ***dadurch gekennzeichnet, dass*** sie eine Kontaktstelle zum Verbinden der Computeranschlussstelle (23) mit dem Bildschirm (3) aufweist.

5. Halterung nach einem der vorhergehenden Ansprüche, ***dadurch gekennzeichnet, dass*** sie ein Netzgerät (29) aufweist.

6. Halterung nach einem der vorhergehenden Ansprüche, ***dadurch gekennzeichnet, dass*** sie einen in das Fach (22) einschiebbaren Computer aufweist.

7. Halterung nach einem der vorhergehenden Ansprüche, ***dadurch gekennzeichnet, dass*** der einschiebbare Computer einen Griff aufweist.

8. Flachbildschirm (3) mit einer Halterung (2) nach einem der vorhergehenden Ansprüche.

9. Flachbildschirm nach Anspruch 8, ***dadurch gekennzeichnet, dass*** die Umfangslinie (16) der Rückseite des Flachbildschirms (3) etwa einer Umfangslinie (17) der Halterung (2) entspricht.

10. Flachbildschirm nach Anspruch 8 oder 9, ***dadurch gekennzeichnet, dass*** die Halterung (2) etwa die Tiefe des Flachbildschirms (3) aufweist.

11. Flachbildschirm nach einem der Ansprüche 8 bis 10, ***dadurch gekennzeichnet, dass*** mindestens eine Seitenfläche (20), (21) des Flachbildschirms (3) mit einer Seitenfläche (18), (19) der Halterung (2) fluchtet.

12. Flachbildschirm nach einem der Ansprüche 8 bis 11, ***dadurch gekennzeichnet, dass*** das Fach (22) in der Nähe der Oberseite des Flachbildschirms (3) angeordnet ist.

13. Anordnung aus Flachbildschirmen (3, 41), Schubladenfach (2, 42) und Computer (43), ***dadurch gekennzeichnet, dass*** der Flachbildschirm (3, 41) am Schubladenfach (2, 42) lösbar befestigt ist und der Computer (43) in das Schubladenfach (2, 42) einschiebbar ist und der Computer (43) mit dem Schubladenfach (2, 42) über eine steckbare Datenverbindung (59, 60; 61, 62) verbunden ist.

14. Anordnung nach Anspruch 13, ***dadurch gekennzeichnet, dass*** die Datenverbindung (59, 60; 61, 62) durch Einschieben des Computers (43) in das Schubladenfach (42) herstellbar ist.

15. Anordnung nach Anspruch 13 oder 14, ***dadurch gekennzeichnet, dass*** das Schubladenfach (2, 42) an der Rückseite (44) des Flachbildschirms (41) angeordnet ist.

16. Anordnung nach einem der Ansprüche 13 bis 15, ***dadurch gekennzeichnet, dass*** das Schubladenfach (2, 42) kleiner als der Flachbildschirm (41) ist.

17. Anordnung nach einem der Ansprüche 13 bis 16, ***dadurch gekennzeichnet, dass*** das Schubladenfach (2, 42) eine Einrichtung (55, 56) zur Befestigung der Anordnung (40) an einer Decke, einer Wand oder einem Ständer aufweist.
